# FASCICULE DE BREVET EUROPEEN

(11) **EP 0 907 284 B1**
(45) Date de publication et mention de la délivrance du brevet: **10.09.2003**
(21) Numéro de dépôt: 98402418.2
(22) Date de dépôt: 01.10.1998
(51) Int. Cl.: H04N 3/15, G01J 3/28

(54) **Dispositif photosensible à couplage et accumulation de charges et lidar incorporant un tel dispositif**
Lichtempfindliche ladungsgekoppelte Vorrichtung mit Ladungsakkumulation und Lidar mit einer solchen Vorrichtung
Charge coupled photosensitive device with charge accumulation and Lidar incorporating such a device

(30) Priorité: 03.10.1997 FR 9712340
(43) Date de publication de la demande: 07.04.1999
(73) Titulaire: Astrium SAS, 78140 Velizy-Villacoublay (FR)
(72) Inventeur: Tulet, Michel, 31130 Balma (FR); Fabre, Frédéric, 31000 Toulouse (FR); Morancais, Didier, 31850 Beaupuy (FR)
(74) Mandataire: Fort, Jacques

(56) Documents cités:
- EP-A- 0 438 335
- EP-A- 0 516 543
- FR-A- 2 735 935
- US-A- 5 166 800

## Description

La présente invention a pour objet un dispositif photosensible à couplage et accumulation de charges électriques, permettant d'analyser un signal lumineux. Elle trouve une application particulièrement importante, bien que non exclusive, dans les appareils dits "lidars" permettant de mesurer la distance d'obstacles ou de milieux sur lesquels on provoque la rétrodiffusion ou la réflexion d'impulsions lumineuses brèves. De tels lidars sont notamment utilisés pour déterminer l'altitude et la position des nuages à partir de mesure de temps de vol d'impulsions laser rétro-diffusées par la surface des nuages. Un type particulier de lidar, dit "lidar vent", permet de mesurer la vitesse moyenne du vent dans des tranches d'altitude, en utilisant le décalage de longueur d'onde provoqué par l'effet Doppler.

On a déjà proposé (document FR-A-2 735 935) un dispositif photosensible à couplage et stockage de charges permettant d'analyser un signal lumineux, incorporant un photodétecteur matriciel. Ce détecteur, dit CCD, présente de nombreux avantages, surtout lorsqu'une sensibilité élevée est requise. Les détecteurs CCD peuvent être réalisés de façon à avoir une efficacité quantique élevée depuis l'ultraviolet jusqu'au proche infrarouge ; ils permettent de regrouper sur une même puce des fonctions d'intégration de charges et de stockage analogique. Ils permettent de transférer des charges à haute fréquence. Leur bruit de lecture est faible.

Le dispositif à couplage de charges suivant FR-A-2 735 935 déjà mentionnée comprend une zone image constituée par une matrice à N colonnes de sites photosensibles recevant le signal lumineux, une zone mémoire constituée par une matrice de N colonnes de sites non photosensibles dont chaque ligne reçoit les charges apparues dans la zone image pendant une durée d'acquisition (qui dans le cas de l'utilisation dans un lidar correspondra à une fenêtre temporelle d'échantillonnage du signal rétrodiffusé à partir d'une impulsion laser) et un registre de lecture de N sites qui reçoit les charges stockées dans les lignes de la zone mémoire, chacune à son tour. A la frontière entre la zone image et la zone mémoire le dispositif présente une zone d'intégration constituée par une ligne de N sites dans lesquels on accumule, colonne par colonne, les charges collectées dans la zone image pendant la durée d'acquisition. Le nombre de lignes de la zone mémoire correspond au nombre de fenêtres temporelles d'échantillonnage dans le cas d'un lidar. Le registre de lecture est lu à la cadence des tirs laser dans le cas d'un lidar, c'est-à-dire à intervalles correspondant au moins à une durée d'observation de la rétrodiffusion.

Dans le cas d'un lidar vent, le dispositif est associé à un spectromètre permettant d'associer chaque colonne de la zone image à un décalage spectral, et donc à une vitesse, différente.

Un tel dispositif permet d'abaisser la fréquence de lecture à une lecture par tir dans le cas d'un lidar. Mais il nécessite, pour beaucoup d'applications où l'intensité de la lumière rétrodiffusée est très faible, un détecteur CCD ayant un élément d'intensification, telle qu'une galette de micro-canaux, lui permettant de travailler en comptage de photons. En effet, un dispositif à couplage de charge nu présenterait un bruit de lecture élevé, susceptible de dégrader la mesure dans le cas d'une lecture à l'issue de chaque durée d'observation, notamment d'un lidar où la lecture est alors à chaque tir.

La présente invention vise à permettre une accumulation des charges de façon analogique, dans des moyens à couplage de charge, permettant de ne lire le dispositif qu'à des intervalles correspondant à plusieurs durées d'observation, donc de plusieurs tirs successifs dans le cas d'un lidar.

Dans ce but, l'invention propose un dispositif photosensible à couplage et accumulation de charges, permettant d'analyser un signal lumineux, suivant la revendication 1.

On peut ainsi réaliser en particulier un rebouclage sur la zone image ou la première zone mémoire, permettant d'accumuler dans chaque ligne de la première zone mémoire les charges provenant de plusieurs sommations successives.

La seconde zone mémoire est en général identique à la première zone mémoire.

L'invention est susceptible de nombreux modes de réalisation.

Dans un premier cas, le registre de lecture comporte au moins N sites supplémentaires vers lesquels sont transférées les charges provenant de la dernière ligne de la première zone mémoire en vue de la réintroduction dans la seconde zone mémoire et la seconde zone mémoire est prévue pour permettre le transfert série des charges accumulées qu'elle contient vers une zone d'intégration. Dans cette zone seront accumulées, à l'issue de chaque durée d'acquisition, les contenus des lignes correspondantes de la seconde zone mémoire et de la zone image. La zone d'intégration peut être constituée par un registre à décalage d'au moins 2N sites, ayant N sites recevant en parallèle le contenu de la dernière ligne de la seconde zone mémoire et N sites capables de faire la sommation des charges qu'ils contiennent des charges transférées de la zone image.

Dans un deuxième cas, la seconde zone mémoire est prévue de façon que les charges contenues dans chaque ligne de cette seconde zone mémoire et qui proviennent des lignes correspondantes de la première zone mémoire, puissent être transférées dans les lignes correspondantes de la zone image avant chaque période d'observation.

Les moyens de cadencement peuvent avoir une constitution similaire à celle décrite dans FR-A-2 735 935 à laquelle on pourra se reporter. Il est seulement nécessaire de prévoir un cadencement ayant des sorties supplémentaires de commande des transferts vers la seconde mémoire auxiliaire et à partir d'elle.

Chacune des architectures ci-dessus permet d'utiliser, dans la zone image, un dispositif à couplage de charges nu, plus simple qu'un dispositif à intensificateur de lumière, ainsi que de détecter aux longueurs d'onde où les intensificateurs de lumière sont peu efficaces, notamment dans le proche infrarouge.

Les caractéristiques ci-dessus ainsi que d'autres apparaîtront mieux à la lecture de la description qui suit de modes particuliers de réalisation, donnés à titre d'exemples non limitatifs. La description se réfère aux dessins qui l'accompagnent, dans lesquels :
- la figure 1 est un schéma de principe d'un lidar vent conforme à un mode de réalisation de l'invention ;
- la figure 2 est une vue schématique en plan d'un dispositif photosensible selon un premier mode de réalisation de l'invention ;
- la figure 3, similaire à la figure 2, montre une variante de réalisation.

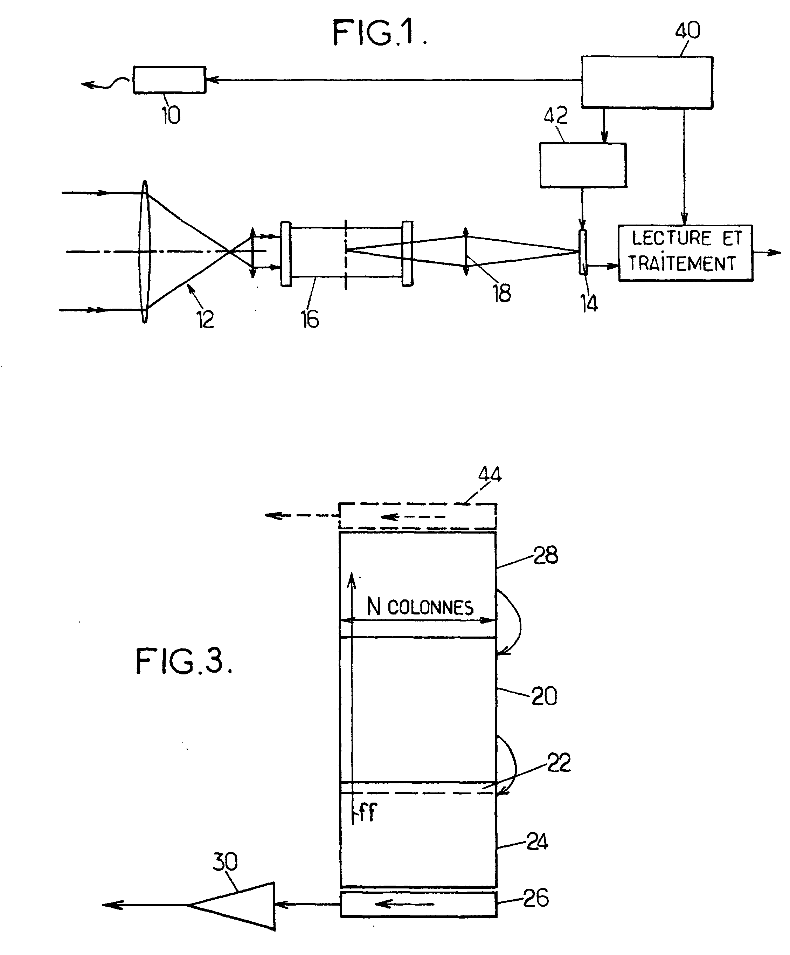

Le lidar est schématisé sur la figure 1 . Il comprend une source 10 d'impulsions lumineuses brèves (typiquement 20 à 30 ns), généralement constituée par un laser à grenat. Le flux lumineux rétrodiffusé, qui présente un décalage de longueur d'onde δλ proportionnel à la vitesse de l'obstacle ou du milieu donnant lieu à rétrodiffusion, est recueilli par une optique télescopique 12 qui fournit un faisceau parallèle à un filtre interférentiel 16, qui peut notamment être un interféromètre de Fizeau. Cet interféromètre a pour fonction de générer une frange linéaire dont la position est décalée, par rapport à un plan médian, en fonction du décalage spectral δλ. Une optique de sortie 18 forme l'image de la ou des franges de sortie de l'interféromètre sur la zone image d'un détecteur CCD 14.

Un cadenceur 40 commande le laser 10 et un générateur 42 des signaux nécessaires au transfert de charges dans le détecteur CCD.

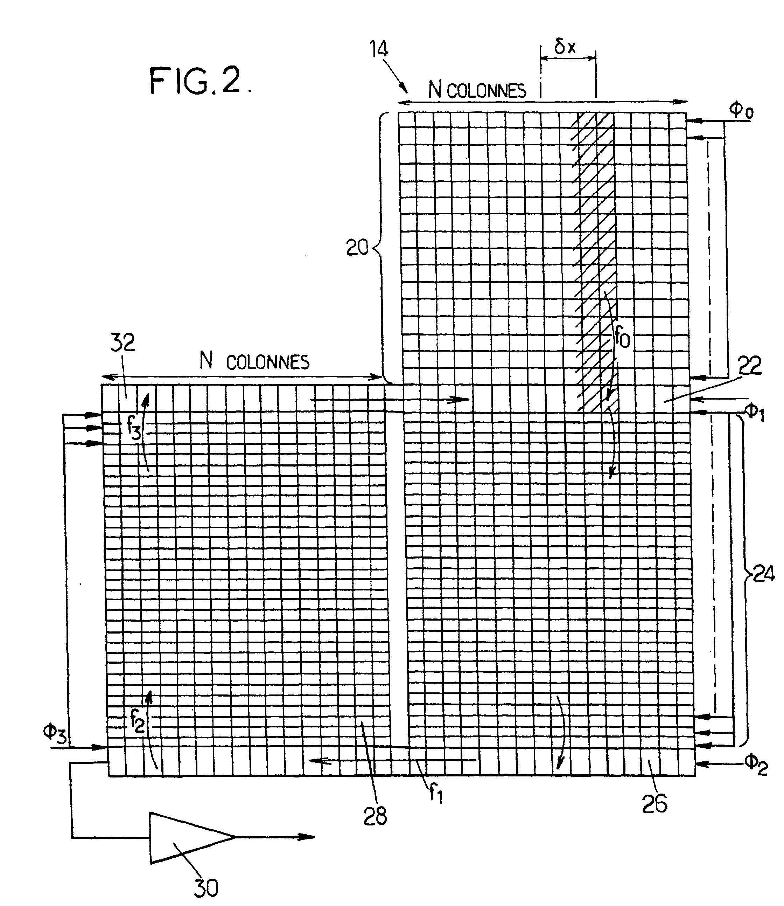

Le dispositif photosensible 14 dont la constitution est montrée en figure 2 comporte une zone image 20 ayant une matrice de M lignes et N colonnes de sites photosensibles. La zone image est suivie, dans le sens f₀ de transfert des charges en parallèle, d'une zone d'intégration 22 constituée par une seule ligne de sites. non photosensibles (par exemple masqués) Toujours dans le sens du transfert des charges en parallèle, la zone d'intégration 22 est suivie d'une première zone mémoire 24, constituée par une matrice de P lignes et N colonnes de sites non photosensibles et d'un registre de lecture 26 à entrées parallèles et à sortie série dans le sens indiqué par la flèche f₁.

Le dispositif de la figure 2 comprend une seconde zone mémoire 28 ayant également une matrice de P lignes et N colonnes de sites non photosensibles. Le registre de lecture 26 comporte au moins 2N sites. Les N premiers sites sont disposés de façon à recevoir en parallèle les charges transférées de la première zone mémoire, ligne par ligne. Les N derniers sites sont placés de façon à transférer en parallèle les charges qu'ils contiennent dans la première ligne (ligne inférieure sur la figure 2) de la seconde zone mémoire 28, comme indiqué par la flèche f₂. Le registre 26 peut également être vidé en série sur un étage de sortie 30.

La zone d'intégration 22 est prévue pour recevoir, ligne par ligne, le contenu de la seconde zone mémoire 28 et accumuler, dans le site appartenant à une colonne donnée, les charges provenant du site correspondant de la colonne correspondante de la seconde mémoire 28 et l'ensemble des charges piégées dans une colonne de la zone image 20 au cours d'une durée d'acquisition.

Pour cela, la zone d'intégration 22 est constituée des N derniers sites d'un registre à décalage à au moins 2N sites. Les N premiers sites constituent un tampon 32 dans lequel le contenu de la seconde mémoire 28 est transféré en parallèle, ligne par ligne, comme indiqué par la flèche f₃.

Les caractéristiques suivantes peuvent être considérées comme représentatives, dans le cas d'un lidar vent ayant un laser fournissant des impulsions de 20 ns et ayant une durée d'acquisition de 8 µs :
- Détecteur monolithique sur silicium, avec masquage par un dépôt d'aluminium ou un masque séparé, et sites carrés de 20 µm de côté
- M = N = 16 pixels
- P = 10 pixels
- Registre de 2N + 1 = 33 sites
- Etage de sortie 30 à gain de 10 µV/e⁻

La frange d'interférence a une position décalée de l'axe d'une distance δx proportionnelle à δλ, avec une répartition énergétique qui peut la conduire à recouvrir plusieurs colonnes. Une localisation avec une précision meilleure qu'un pixel (largeur d'un site) peut être obtenue par calcul de barycentre.

Le fonctionnement pendant la première période d'observation est le même que celui décrit dans la demande FR 95 07349 mais la lecture ne s'effectue qu'au bout d'un nombre élevé de durées d'observation, typiquement de 100 à 2000.

La séquence est la suivante :
(1) Les lignes de la zone image 20 sont accumulées à cadence élevée dans le registre 22 à l'issue de chaque durée d'acquisition, sous l'action de signaux de décalage φ₀.
(2) Pendant la durée d'acquisition suivante, les charges sont transférées du registre 22 dans la première ligne de la première zone mémoire 24, dans laquelle on décale les lignes en bloc. Cette opération est répétée jusqu'à ce que les P lignes de la première mémoire contiennent les résultats correspondant à P acquisitions, c'est-à-dire à P échantillons temporels successifs (signaux φ₁).
(3) A la fin de cette première observation, le contenu complet de la première zone mémoire 24 est transféré dans la seconde zone mémoire 28 par l'intermédiaire du registre 26 (signaux φ₁, φ₂ et φ₃).
(4) Avant que ne commence une seconde période d'observation, les charges contenues dans la dernière ligne de la zone mémoire 28 sont chargées dans les sites 32 du second registre, puis translatés dans la zone d'intégration 22, sous la zone image 20.
   A l'issue de chaque période d'acquisition d'une même période d'observation, les charges collectées sont ajoutées aux précédentes lors du transfert de l'image dans les sites 22 du registre à décalage. Cette opération est réalisée pour les P échantillons temporels, chaque fois en transférant le contenu d'une ligne de la seconde zone mémoire 28 dans les sites 22.
(5) Les phases (3), (4) et (5) sont répétées.
(6) Après accumulation du nombre d'observations voulu, les charges sont lues par l'intermédiaire de l'étage de sortie du registre 26.

La figure 3, où les organes correspondant à ceux de la figure 2 portent le même numéro de référence, décrit le second mode de réalisation. Le détecteur est constitué d'une zone image 20 encadrée par la première zone mémoire 24 et la seconde zone mémoire 26. Une zone d'intégration 22 est prévue dans la mémoire 24. Elle peut appartenir à cette mémoire ou être constituée par un élément supplémentaire. En aval de la première zone mémoire 24, dans le sens de circulation des charges lors de l'observation, est prévu un registre de lecture 26 relié à l'étage de sortie 30. Le registre de lecture peut aussi bien être placé en 44 de façon à recevoir le contenu de la seconde zone mémoire 28. Deux registres peuvent être prévus, l'un pour la lecture, l'autre pour l'évacuation de charges parasites. Ce dernier registre peut être remplacé par un drain de purge.

Le mode de réalisation de la figure 3 est plus simple que celui de la figure 2 en ce qui concerne la structure du détecteur. Mais en contrepartie, il exige que la zone image et les zones mémoire puissent être contrôlées indépendamment et de façon bidirectionnelle, afin de permettre la lecture.

Dans le mode de réalisation de la figure 3, la séquence de fonctionnement peut être la suivante :
(1) Toutes les lignes de la zone image 20 sont accumulées dans la première ligne de la zone mémoire 24 à l'issue de la première période d'acquisition.
(2) Au cours de l'acquisition suivante, les charges sont transférées de la première à la seconde ligne de la zone mémoire 24 par décalage en bloc.
(3) Les opérations sont répétées jusqu'au chargement complet des P lignes de la première mémoire 24, correspondant à P échantillonnages temporels.
(4) A la fin de cette première observation, la totalité du contenu de la première zone mémoire 24 est transférée dans la seconde zone mémoire 28. Cette opération s'effectue en traversant la zone image 20 (flèche ff sur la figure 3).
(5) Enfin la séquence ci-dessus est répétée pendant le nombre d'observations prévu.

Dans l'application de l'invention à la constitution d'un lidar, les moyens de cadencement sont prévus pour provoquer l'accumulation de charges pendant des périodes d'acquisition successives correspondant à des temps d'aller-retour de la lumière différents et pour provoquer les observations successives à la cadence d'émission d'impulsions par la source.

Le dispositif peut comporter une source d'impulsions lumineuses courtes, sensiblement monochromatique, permettant l'accumulation de plusieurs images successives en effectuant un transfert ligne à ligne de la zone image 20 à la zone mémoire 24 ; cette source peut notamment être du genre décrit dans le document FR-A- 2 602 057 (brevet n° 86 10621).

## Revendications

1. Dispositif photosensible à couplage et accumulation de charges, permettant d'analyser un signal lumineux, au cours de plusieurs périodes d'observation ayant chacune plusieurs périodes d'acquisition successives, comprenant :
- une zone image (20) constituée par une matrice de M lignes et N colonnes de sites photosensibles, destinée à recevoir le signal lumineux,
- une première zone mémoire (24) constituée par une matrice de P lignes et N colonnes de sites non photosensibles, destinée à recevoir, dans chaque site d'une première ligne, constituant ligne d'intégration, la somme des charges dans une colonne respective de la zone image, à l'issue de chacune de périodes d'acquisition successives, P étant un entier supérieur à 1,
- un registre de lecture (26) ayant une seule ligne de N sites, destinés à recevoir en parallèle les charges stockées dans les sites de la dernière ligne de la première zone mémoire (24),
- une seconde zone mémoire (28), à P lignes et N colonnes, destinée à recevoir en parallèle les charges admises aux N sites du registre de lecture (26) et à les ramener à N sites d'une même ligne de la zone image (20) ou de la première zone mémoire (24), pour accumuler, dans chaque ligne de la première zone mémoire (24), les charges accumulées au cours d'une période d'observation et provenant de plusieurs sommations successives, et
- des moyens de cadencement permettant :
- à l'issue de chaque période d'acquisition, de transférer, à vitesse élevée par rapport à l'acquisition, les charges stockées dans tous les sites de toutes les colonnes de la zone image, le long des colonnes, vers des sites respectifs de la ligne d'intégration pour les y sommer,
- pendant chaque période d'observation, de transférer les charges accumulées dans chaque site de la ligne d'intégration, pas à pas, à la cadence des périodes d'acquisition succesives, le long des colonnes de la zone mémoire, vers le registre de lecture, et
- de lire le registre de lecture après plusieurs périodes d'observation.

2. Dispositif suivant la revendication 1, **caractérisé en ce que** le registre de lecture comporte au moins N sites supplémentaires placés en série avec les N sites déjà mentionnés, et les moyens de cadencement sont prévus pour provoquer le transfert des charges provenant de la dernière ligne de la première zone mémoire (24) vers la seconde zone mémoire (28) et provoquer le transfert en série des charges accumulées dans la seconde zone mémoire (28) vers une zone d'intégration en vue du retour à la zone image.

3. Dispositif selon la revendication 2, **caractérisé en ce que** la zone d'intégration est prévue pour y accumuler, à l'issue de chaque durée d'acquisition, les charges contenues dans les sites d'une ligne de la seconde zone mémoire.

4. Dispositif selon la revendication 2, **caractérisé en ce que** ladite zone d'intégration (22) est constituée par N sites d'un registre à décalage dont N autres sites (32) constituent un tampon de transfert depuis la seconde mémoire.

5. Dispositif selon la revendication 1, **caractérisé en ce que** la seconde zone mémoire (28) est prévue de façon que le charges contenues dans chaque ligne de la seconde zone mémoire (28) et qui proviennent des lignes correspondantes de la première zone mémoire (24) soient transférées dans les lignes correspondantes de la zone image (20) avant chaque période d'acquisition.

6. Dispositif photosensible à couplage et accumulation de charges, permettant d'analyser un signal lumineux sur l'ensemble de plusieurs périodes d'observation ayant chacune plusieurs périodes d'acquisition successives, comprenant :
- une zone image (20) constituée par une matrice de M lignes et N colonnes de sites photosensibles, destinée à recevoir le signal lumineux, M et N étant des entiers supérieurs à 1 ;
- un premier registre à décalage (32,22) ayant une seule ligne de 2N sites, dont les N derniers sites, constituant ligne d'intégration, sont prévus pour recevoir, en parallèle, la somme des charges générées dans une colonne respective de la zone image à l'issue de chacune des périodes d'acquisition successives ;
- une première zone mémoire (24) constituée par une matrice de P lignes et N colonnes de sites non photosensibles, P étant un entier supérieur à 1, ayant une première ligne de sites ;
- un second registre à décalage (26, 28) ayant une seule ligne de 2N sites dont chacun des N premiers sites est prévu pour recevoir des charges stockées dans un site respectif d'une dernière ligne de la première zone mémoire (24) ;
- une seconde zone mémoire (28) ayant P lignes et N colonnes, destinée à recevoir en parallèle les charges contenues dans les N derniers sites du second registre à décalage et à mémoriser les dites charges et les transférer de ligne en ligne, puis aux N premiers sites du premier registre à décalage en vue du transfert dans les N derniers sites du premier registre à décalage ; et
- des moyens de cadencement pour :
a) à l'issue de chaque période d'acquisition d'une même période d'observation, transférer, à vitesse élevée par rapport à l'acquisition, les charges dans tous les sites de toutes les colonnes de la zone image, le long des colonnes, vers des sites respectifs des N derniers sites du premier registre à décalage,
b) de façon répétitive, au cours de chaque période d'observation, transférer les charges accumulées dans tous les sites des N derniers sites du premier registre à décalage, une ligne à la fois, à la fréquence des acquisitions, le long des N premiers sites du second registre à décalage,
c) à la fin de chaque période d'observation, transférer les charges contenues dans la première zone mémoire dans la seconde zone mémoire par l'intermédiaire du second registre à décalage, et
d) répéter les étapes a), b) et c), chaque fois après le transfert des charges contenues dans les sites d'une dernière ligne de la seconde zone mémoire, vers les N premiers sites du premier registre à décalage et de là au N dernier site de ce premier registre à décalage.

7. Dispositif selon l'une quelconque des revendications 1 à 6, **caractérisé en ce que** le dispositif à couplage de charges n'est pas associé à un intensificateur optique.

8. Lidar comprenant :
- une source impulsionnelle de lumière (10),
- un dispositif suivant l'une quelconque des revendications précédentes, placé pour recevoir la lumière réfléchie ou rétrodiffusée sur des obstacles ou milieux, dans lequel les moyens de cadencement sont prévus pour provoquer l'accumulation de charges pendant des périodes d'acquisition successives correspondant à des temps d'aller-retour de la lumière différents et pour provoquer des observations successives à la cadence d'émission d'impulsions par la source.

9. Lidar vent selon la revendication 8, **caractérisé en ce qu'**il comporte un interféromètre (16) agencé pour diriger vers différentes colonnes de la zone image des composantes spectrales de longueur d'onde différentes.

10. Lidar comprenant une source impulsionnelle de lumière et un dispositif selon la revendication 1, en ce que les moyens de cadencement sont prévus pour commander le transfert ligne à ligne de la zone image (20) à la première zone mémoire (24).

## Patentansprüche

1. Lichtempfindliche Vorrichtung mit Ladungskopplung und Ladungsakkumulation zur Analyse eines Lichtsignals im Verlauf mehrerer Beobachtungsphasen, von denen jede mehrere aufeinanderfolgende Erfassungsphasen aufweist, umfassend:
- eine Bildzone (20), gebildet aus einer Matrix mit M Zeilen und N Spalten lichtempfindlicher Felder, bestimmt für die Aufnahme des Lichtsignals,
- eine erste Speicherzone (24), gebildet aus einer Matrix mit P Zeilen und N Spalten nicht-lichtempfindlicher Felder, bestimmt für die Aufnahme der Summe der Ladungen in einer jeweiligen Spalte der Bildzone in jedem Feld einer ersten Zeile, die eine Integrationszeile bildet, am Ende jeder der aufeinanderfolgenden Aufnahmeperioden, wobei P eine ganze Zahl größer 1 ist,
- ein Leseregister (26) mit einer einzigen Zeile mit N Feldern, bestimmt zur parallelen Aufnahme der Ladungen, die in den Feldern der letzten Zeile der ersten Speicherzone (24) gespeichert sind,
- eine zweite Speicherzone (28) mit P Zeilen und N Spalten, bestimmt für die parallele Aufnahme der in den N Feldern des Leseregisters (26) aufgenommenen Ladungen und für ihre Rückführung auf N Felder einer Zeile der Bildzone (20) oder der ersten Speicherzone (24), um in jeder Zeile der ersten Speicherzone (24) die während einer Beobachtungsphase akkumulierten und aus mehreren aufeinanderfolgenden Summierungen stammenden Ladungen zu akkumulieren, und
- Takt-Mittel, welche ermöglichen:
- am Ende jeder Erfassungsphase mit hinsichtlich der Erfassung erhöhter Geschwindigkeit die in allen Feldern aller Spalten der Bildzone gespeicherten Ladungen entlang der Spalten in die entsprechenden Felder der Integrationszeile zu übertragen, um sie dort zu summieren,
- während jeder Beobachtungsphase die in jedem Feld der Integrationszeile akkumulierten Ladungen Schritt für Schritt im Takt der aufeinanderfolgenden Erfassungsphasen, entlang der Spalten der Speicherzone in das Leseregister zu übertragen, und
- das Leseregister nach mehreren Beobachtungsphasen auszulesen.

2. Einrichtung nach Anspruch 1, **dadurch gekennzeichnet, dass** das Leseregister mindestens N zusätzliche, seriell zu den beschriebenen N Feldern angeordnete Felder enthält, und Takt-Mittel dazu vorgesehen sind, die Übertragung der Ladungen aus der letzten Zeile der ersten Speicherzone (24) in die zweite Speicherzone (28) herbeizuführen und die serielle Übertragung der in der zweiten Speicherzone (28) akkumulierten Ladungen in eine Integrationszone im Hinblick auf eine Rückführung zur Bildzone zu bewirken.

3. Einrichtung nach Anspruch 2, **dadurch gekennzeichnet, dass** die Integrationszone dazu vorgesehen ist, dort am Ende jeder Erfassungszeit die in den Feldern einer Zeile der zweiten Speicherzone enthaltenen Ladungen zu akkumulieren.

4. Einrichtung nach Anspruch 2, **dadurch gekennzeichnet, dass** die genannte Integrationszone (22) N Felder eines Schieberegisters umfasst, von welchemN weitere Felder (32) einen Übertragungspuffer ausgehend vom zweiten Speicher bilden.

5. Einrichtung nach Anspruch 1, **dadurch gekennzeichnet, dass** die zweite Speicherzone (28) derart ausgebildet ist, dass die in jeder Zeile der zweiten Speicherzone (28) enthaltenen Ladungen, die aus den entsprechenden Zeilen der ersten Speicherzone (24) stammen, vor jeder Erfassungsphase in die entsprechenden Zeilen der Bildzone (20) übertragen werden.

6. Lichtempfindliche Vorrichtung mit Ladungskopplung und Ladungsakkumulation zur Analyse eines Lichtsignals über die Gesamtheit mehrerer Beobachtungsphasen, von denen jede mehrere aufeinanderfolgende Erfassungsphasen aufweist, umfassend:
- eine Bildzone (20), bestehend aus einer Matrix mit M Zeilen und N Spalten lichtempfindlicher Felder, bestimmt für die Aufnahme eines Lichtsignals, wobei M und N ganze Zahlen größer 1 sind;
- ein erstes Schieberegister (32, 22) mit einer einzigen Zeile mit 2N Feldern, von denen die letzten N Felder als Integrationszeile für die parallele Aufnahme der Summe der in einer entsprechenden Spalte der Bildzone am Ende jeder der aufeinanderfolgenden Erfassungsphasen erzeugten Ladungen vorgesehen sind;
- eine erste Speicherzone (24), bestehend aus einer Matrix mit P Zeilen und N Spalten nicht lichtempfindlicher Felder, wobei P eine ganze Zahl größer 1 ist, welche eine erste Zeile von Feldern aufweist;
- ein zweites Schieberegister (26, 28) mit einer einzigen Zeile mit 2N Feldern, von denen jedes der ersten N Felder dafür ausgelegt ist, die in einem entsprechenden Feld einer letzten Zeile der ersten Speicherzone (24) gespeicherten Ladungen aufzunehmen;
- eine zweite Speicherzone (28) mit P Zeilen und N Spalten, die dafür bestimmt ist, die in den letzten N Feldern des zweiten Schieberegisters enthaltenen Ladungen parallel aufzunehmen, die genannten Ladungen zu speichern und sie zunächst Zeile für Zeile, dann, im Hinblick auf die Übertragung in die letzten N Felder des ersten Schieberegisters, in die ersten N Felder der ersten Schieberegisters zu übertragen; und
- Takt-Mittel, um:
a) am Ende jeder Erfassungsphase einer Beobachtungsphase mit hinsichtlich der Erfassung erhöhter Geschwindigkeit die in allen Feldern aller Spalten der Bildzone gespeicherten Ladungen entlang der Spalten in die entsprechenden Felder der letzten N Felder des ersten Schieberegisters zu übertragen,
b) wiederholt während jeder Beobachtungsphase die in den letzten N Feldern des ersten Schieberegisters akkumulierten Ladungen Zeile für Zeile entsprechend der Frequenz der Erfassungen entlang der ersten N Felder des zweiten Schieberegisters zu übertragen,
c) am Ende jeder Beobachtungsphase die in der ersten Speicherzone enthaltenen Ladungen mit Hilfe des zweiten Schieberegisters in die zweite Speicherzone zu übertragen, und
d) die Schritte a), b) und c) jedes Mal nach der Übertragung der in den Feldern einer letzten Zeile der zweiten Speicherzone enthaltenen Ladungen in die ersten N Felder des ersten Schieberegisters sowie von dort in die letzten N Felder dieses ersten Schieberegisters zu wiederholen.

7. Einrichtung nach einem der Ansprüche 1 bis 6, **dadurch gekennzeichnet, dass** die Vorrichtung mit Ladungskopplung nicht mit einem optischen Bildverstärker verbunden ist.

8. Lidar umfassend:
- eine Lichtimpulsquelle (10),
- eine Einrichtung nach einem der vorangehenden Ansprüche, deren Anordnung den Empfang von Licht ermöglicht, das an Hindernissen oder Materialien reflektiert oder rückgestreut wird, und in der Takt-Mittel vorhanden sind, welche dafür vorgesehen sind, die Ladungsakkumulation während aufeinanderfolgender Erfassungsphasen herbeizuführen, die verschiedenen Zeiträumen des Hin- und Rückwegs des Lichts entsprechen, und die dafür dazu vorgesehen sind, aufeinanderfolgende Beobachtungen mit der Geschwindigkeit der von der Quelle ausgesandten Impulse herbeizuführen.

9. Wind-Lidar nach Anspruch 8, **dadurch gekennzeichnet, dass** es ein Interferometer (16) umfasst, welches derart angelegt ist, dass es Spektralkomponenten verschiedener Wellenlängen auf verschiedene Spalten der Bildzone lenken kann.

10. Lidar umfassend eine Lichtimpulsquelle und eine Einrichtung nach Anspruch 1, **dadurch gekennzeichnet, dass** Takt-Mittel vorhanden sind, welche eine Übertragung Zeile für Zeile von der Bildzone (20) in die erste Speicherzone (24) befehlen.

## Claims

1. Photosensitive charge coupling and accumulation device, enabling the analysis of a light signal for a plurality of observation periods each comprising a plurality of successsive acquisition periods, having :
- an image zone (20) constituted by a matrix of M lines and N columns of photosensitive sites, intended to receive the light signal,
- a first memory zone (24) constituted by a matrix of P lines and N columns of non-photosensitive sites, intended to receive, in each site of a first line, constituting an integration line, the sum of the charges acquired in a respective column of the image zone, at the close of each of successive acquisition periods, P being an integer greater than 1,
- a read-out register (26) having a single line of N sites, intended to receive in parallel the charges stored in the sites of the last line of the first memory zone (24),
- a second memory zone (28) with P lines and N columns, intended to receive, in parallel, the charges coming from several successive summations, and
- timing means enabling :
- at the close of each acquisition period, transfer, at high speed as compared to acquisition of the charges stored in all sites of all columns of the image zone, along the columns, to respective sites of the integration line for summation,
- during each observation period, transfer of the charges accumulated in each site of the integration line, step by step, at the frequency of the successive acquisition periods, along the columns of the memory zone, to the read-out register, and
- reading out of the read-out register after a plurality of observation periods.

2. Device according to claim 1, **characterized in that** the read-out register comprises at least N additional sites in series relation with the aforementioned sites and the timing means are arranged for causing transfer of the charges coming from the last line of the first memory zone (24) to the second memory zone (28) and serial transfer of the charges accumulated in the second memory zone (28) to an integration zone for return to the image zone.

3. Device according to claim 2, **characterized in that** the integration zone is arranged for accumulating, at the close of each acquisition period, the charges contained in the sites of one line of the second memory zone.

4. Device according to claim 2, **characterized in that** said integration zone (22) is constituted by N sites of a shift register having N other sites (32) which constitute a buffer for transfer from the second memory.

5. Device according to claim 1, **characterized in that** the second memory zone (28) is so arranged that the charges contained in each line of the second memory zone (28) and which originate from the corresponding lines of the first memory zone (24) are transferred to the corresponding lines of the image zone (20) before each acquisition period.

6. A photosensitive charge coupling and accumulation device for analysis of a light signal over a plurality of observation periods each comprising a plurality of successive acquisition periods each having a plurality of successive acquisition periods, including:
- an image zone (20) constituted by a matrix of M lines and N columns of photosensitive sites for receiving the light signal, M and N being integers greater than 1;
- a first shift register (32,22) having a single line of 2N sites, whose last N sites, constituting an integration line, are for receiving in parallel the sum of charges generated in a respective column of the image zone at the end of each of successive acquisition periods,
- a first memory zone (24) constituted by a matrix of P lines and N columns of non-photosensitive sites having a first line of sites, P being an integer greater than 1;
- a second shift register (26, 28) having a single line of 2 N sites, each of the N first sites being apt to receive charges stored in a respective site of a last line of the first memory zone (24);
- a second memory zone (28) having P lines of N sites, apt to receive, in parallel, the charges contained in the last N sites of the second shift register and apt to store said charges and to transfer them from line to line and then to the N first sites of the first shift register for transfer into the N last sites of the first shift register; and
- timing means for:
- (a) at the end of each acquisition period of a same observation period, transferring, in a time short as compared to the duration of each acquisition period, the charges present in all sites of all columns of the image zone along the columns to respective sites of the N last sites of the first shift register,
- (b) repeatedly, during each observation period, transferring the charges accumulated in all sites of the N last sites of the first shift register, one line at a time, at the frequency of the acquisitions, along the first N sites of the second shift register,
- (c) at the end of each observation period, transferring the charges contained in the first memory zone into the second memory zone via the second shift register, and
- (d) repeating steps (a), (b) and (c), each time after the charges contained in the sites of a last line of the second memory zone have been transferred to the N first sites of the first shift register and therefrom to the N last sites of the first shift register.

7. Device according to any one of claims 1 - 6, **characterized in that** the charge coupled device is not associated with an image amplifier.

8. A lidar having:
a source of pulses of light (10);
a device according to any one of the preceding claims, placed to receive light reflected or back scattered by obstacles or a medium, wherein the timing means are arranged to cause accumulation of charges during successive acquisition periods corresponding to different times of there and back light flight and to cause the successive observations to occur at the rate of the pulses sent by the source.

9. Wind lidar according to claim 8, **characterized in that** it further comprises an interferometer (16) arranged for directing spectral components at different wave lengths to different columns of the image zone.

10. Lidar comprising a source of pulse light and a device according to claim 1, **characterized in that** the timing means are arranged for controlling line by line transfer from the image zone (20) to the first memory zone (24).
